# EUROPÄISCHE PATENTSCHRIFT

(11) **EP 3 491 992 B1**
(45) Veröffentlichungstag und Bekanntmachung des Hinweises auf die Patenterteilung: **27.05.2020**
(21) Anmeldenummer: 18208025.9
(22) Anmeldetag: 23.11.2018
(51) Int. Cl.: A47L 13/62, A47L 13/50, G01F 11/00, A47L 13/51

(54) **DOSIERSYSTEM UND DOSIERVERFAHREN**
DOSING SYSTEM AND DOSING PROCESS
SYSTÈME DE DOSAGE ET PROCÉDÉ DE DOSAGE

(30) Priorität: 01.12.2017 DE 102017128600
(43) Veröffentlichungstag der Anmeldung: 05.06.2019
(73) Patentinhaber: Pfennig Reinigungstechnik GmbH, 87471 Durach (DE)
(72) Erfinder: PFENNIG, Dietmar, 87477 Sulzberg (DE)
(74) Vertreter: Hoppe, Lars

(56) Entgegenhaltungen:
- EP-A1- 1 736 091
- EP-A1- 2 633 795
- WO-A1-2015/090356
- DE-A1- 10 211 978
- US-A- 5 489 044

## Beschreibung

Die vorliegende Erfindung betrifft ein Dosiersystem im Bereich der gewerblichen Reinigung zur Dosierung von Reinigungslösung auf Moppbezüge sowie ein Dosierverfahren zum Dosieren von Reinigungslösung.

Im Bereich der gewerblichen Reinigung werden je nach Einsatzbereich Moppbezüge aus unterschiedlichen Materialien eingesetzt, beispielsweise aus Mikrofaser oder mit einem Mikrofaseranteil. Ein solcher Moppbezug wird dabei entweder schon vorbefeuchtet auf einem Reinigungswagen mitgeführt oder unmittelbar am Einsatzort befeuchtet. Im ersten Fall kommen Behälter zum Einsatz, in der die geschichteten, frischen Moppbezüge mit einer bestimmten Menge Reinigungslösung befeuchtet gelagert sind und die üblicherweise kurz vor Entnahme eines Moppbezuges auf dem Reinigungswagen eine Zeit lang umgedreht gelagert werden, um ihre gleichmäßige Durchfeuchtung zu gewährleisten. Derartige Behälter sind beispielsweise in der EP 0 858 766 B1 beschrieben. Gemäß der EP 1 262 139 A2 können diese Behälter auch ein Reinigungsmittelreservoir aufweisen, dass in Abhängigkeit vom Beladungszustand Reinigungslösung auf die gelagerten frischen Moppbezüge abgibt. Der Begriff Reinigungslösung ist dabei global für alle Lösungen verwendet, die während einer gewerblichen Reinigung eingesetzt werden und erfasst insbesondere auch Desinfektionslösungen.

Bei der Methode der Befeuchtung am Einsatzort wurde der Moppbezug traditionell in einen offenen Behälter mit Reinigungslösung getaucht und anschließend durch Pressen etwas entfeuchtet. Diese Methode führt jedoch zu ungenauen und nicht gleichbleibenden Reinigungsmittelmengen auf den Moppbezügen. Eine solche ist jedoch von großer Bedeutung, da zu feuchte Moppbezüge gleichsam auf einem Wasserfilm gleiten und die Schmutzpartikel daher nicht ausreichend aufnehmen. Außerdem wirkt sich ein Überschuß an Reinigungslösung in der Regel nachteilig auf die zu reinigende Oberfläche aus. Zu trockene Moppbezüge wiederum haben ebenfalls eine erschwerte Schmutzpartikelaufnahme, da letztere bei zu trockenem Moppbezug nicht ausreichend in dessen Fasern geschwemmt werden. Ausserdem ist die Belastung der Fasern des Moppbezuges beim Wischen höher, so dass diese leichter ausfransen und unerwünscht Partikel abgeben, was gerade bei einer Reinigung in einem klinischen oder sonstigen Reinraum unerwünscht ist.

Es wurden daher auch Vorratsbehälter für Reinigungsmittel entwickelt, die aus einem Reservoir eine bestimmte Menge Reinigungslösung abgebend sind.

Eine solche Vorrichtung wird in der EP 0 781 524 A2, beschrieben. Hier drückt ein Benutzer mit seinem Mopphalter mit aufgezogenem Moppbezug von oben auf eine Druckplatte, die über ein Hebelsystem ein Ventil anhebend ist, so dass Reinigungslösung aus einem Vorratstank durch die freigegene Leitung von unten an den Moppbezug strömen kann. Solange der Benutzer auf die Druckplatte drückt, fließt Reinigungslösung, so dass eine exakte Dosierung schwierig ist.

Aus der EP 1 736 091 A1 ist eine Vorrichtung bekannt, bei der ein geschlossener Vorratsbehälter an einem Reinigungswagen oberhalb eines Auffangbehälters angeordnet und nach manueller Betätigung eine bestimmte, innerhalb bestimmter Grenzen einstellbare Reinigungsmittelmenge freigebend ist. Diese Freigabe erfolgt über zwei Ventile, die per Hebel gegen Federkräfte bewegbar sind und jeweils Zu- und Abfluß in eine Meßkammer regelnd sind. Nachteilig an dieser bekannten Vorrichtung ist besonders der wenig praxistaugliche, komplexe Aufbau und damit verbunden eine mangelhafte Reinigbarkeit.

Schließlich sind noch Dosiervorrichtungen bekannt, bei denen eine Schöpfvorrichtung in einem Vorratsbehälter unterhalb einer Reinigungslösungsoberfläche angeordnet ist und über eine Schwenk- oder Hebebewegung über diese herausgehoben wird, so dass ein bestimmtes Volumen Reinigungslösung zur eintauchenden Benetzung eines Moppbezuges zur Verfügung gestellt ist. Nachteilig ist hier die Bewegung des Schöpfvolumens, die insbesondere bei reinen Hebebewegungen wie bei der DE 20 2013 011 946 U1 zum Verspritzen und damit zu einem sehr unsauberen Arbeiten führen.

Aus der DE 102 11 978 A1 ist ein Flüssigkeitsspender zur Entnahme von Schaum bekannt, bei dem ein Pumpenkolben in einem zylindrischen Hohlraum gleitet, dessen oberes Ende in Verbindung mit einem Vorratsvolumen steht. Der Pumpenkolben ist mittels eines kraftbeaufschlagten Hebels vertikal zwischen einer ersten und einer zweiten Position bewegbar, wobei die Kolbenstange als Hohlrohr mit Wandöffnungen ausgebildet ist und sie radial auswärts weisende und zueinander entlang der Kolbenstangenlängsachse beabstandete Scheiben aufweist. Zwei dieser Scheiben definieren zwischen sich ein Dosiervolumen, abgeschlossen durch die Wand des zylindrischen Hohlraumes, in dem der Pumpenkolben gleitet, das in einer Position mit dem Vorratsvolumen in Verbindung steht und in einer zweiten Position in einen durchmessergrößeren zylindrischen Hohlraum entwässert, in dem die Flüssigkeit über die Wandöffnungen in das Innere des Hohlrohrs und von dort über dessen unteres Ende ins Freie zu einem Benutzer gelangen kann. Diese Vorrichtung ist konstruktiv komplex und nicht zu einer raschen Befeuchtung eines Moppbezuges geeignet.

Aus der US 2016/0015237 A1 ist ein Ventilkörper einer Dosiereinheit im Bereich der gewerblichen Reinigung bekannt, bei der ein Vorratsvolumen oberhalb der Dosiervorrichtung angeordnet ist. Diese weist einen mit dem Vorratsvolumen in Verbindung stehenden, kegeligen Rohrabschnitt und einen in diesem Abschnitt beweglich geführten Kolben auf, der einen, an seinem axial oberen Bereich angeordneten Ventilteller bewegt, der das Vorratsvolumen verschließend oder freigebend ist. In der freigegebenen Position strömt Reinigungsflüssigkeit an dem Ventilteller vorbei entlang des Kolbens nach unten und tritt dort aus. Diese bekannte Vorrichtung ist konstruktiv aufwendig.

Die vorliegende Erfindung stellt sich daher die Aufgabe, eine Dosiervorrichtung anzugeben, die konstruktiv einfach ist und ein sicheres, sauberes Arbeiten ermöglicht.

Diese Aufgabe wird gelöst durch ein Dosiersystem für Reinigungsflüssigkeiten im Bereich der gewerblichen Reinigung aufweisend die Merkmale ein Vorratsvolumen und eine am Vorratsvolumen angeordnete Dosiervorrichtung, wobei die Dosiervorrichtung einen mit dem Vorratsvolumen in Verbindung stehenden Rohrabschnitt und einen in diesem beweglich geführten Hohlkolben aufweist, wobei ein Hohlraum des in einer ersten Position befindlichen Hohlkolbens aus dem Vorratsvolumen heraus zugänglich ist und der Hohlraum des in einer zweiten Position befindlichen Hohlkolbens mit einer Umgebung des Dosiersystems in Verbindung stehend ist, wobei der Hohlkolben zwei, voneinander mittels eines Abstandshalters beabstandete Stirnseitendeckel aufweist, die zwischen sich ein Dosiervolumen definieren, wobei der Abstandshalter als Zylindermantelabschnitt und/oder als ein oder mehrere Stege ausgebildet ist, wobei die Stege miteinander verbunden und/oder in ihrer Längsachse ein- oder mehrfach geteilt und/oder mit einem Stirnseitendeckel verbunden ausgebildet sind.

Die Erfindung versteht dabei unter einem Hohlkolben in erster Linie einen Kolben, der zwischen einem oberen und einem unteren Ende ein nicht materialgefülltes, intrinsisches Volumen aufweist, welches mit ihm beweglich ist. Ein solcher Kolben weist erfindungsgemäß nicht zwingend eine Seitenwand und schon gar nicht eine geschlossene Seitenwand auf, wie sie beispielsweise durch eine Mantelfläche eines Zylinders gebildet würde, da derartige Seitenwände mit gleicher Funktionalität auch durch dasjenige Bauteil gebildet sein können, in dem der erfindungsgemäße Hohlkolben beweglich ist. Ein derartiger Hohlkolben ist konstruktiv einfach und hoch funktional und stellt mit dem ihm eigenen Volumen zur Aufnahme einer Reinigungslösung einen abgeschlossenen Raum zur Verfügung, der durch Verbringung von einer ersten in eine zweite Position zum Ein- und Austritt der Reinigungslösung zugänglich ist. Das Vorsehen eines solchen abgeschlossenen Volumens - des Dosiervolumens - beseitigt die aus dem Stand der Technik bekannte Gefahr einer Über- oder Unterdosierung von Reinigungslösung auf dem Moppbezug, wie sie bei per Ventil geöffneten Ausflüssen von Reinigungslösungsreservoirs durch vom Benutzer betätigten Druckplatten gegeben ist. Da die Erfindung bevorzugt rein mechanisch betreibbar ist, werden elektrische Antriebe mit entsprechender Notwendigkeit einer Spannungsversorgung mit Vorteil vermieden. Dadurch, dass der Hohlraum nur in einer ersten Position aus dem Vorratsvolumen heraus zugänglich ist, wird mit Vorteil ein ungewolltes Leerlaufen des Vorratsvolumens vermieden, da er in jeder anderen Position eben nicht in Kontakt mit dem Vorratsvolumen steht. Nur in der zweiten Position steht der Hohlraum mit einer Umgebung in Verbindung, so dass das Vorratsvolumen in dieser Position abgeschlossen ist, jedenfalls nicht über den Hohlkolben mit einer Umgebung in Verbindung steht. Bevorzugt ist in dieser zweiten Position der Hohlkolben das Vorratsvolumen dichtend ausgebildet. Erfindungsgemäß ist vorgesehen, dass der Hohlkolben zwei, voneinander mittels eines Abstandshalters, beabstandete Stirnseitendeckel aufweist. Die Stirnseitendeckel sind dabei bevorzugt dichtend gegen den Rohrabschnitt, bzw. das Vorratsvolumen ausgebildet, die Länge des Abstandshalters legt dann zusammen mit einer Grundfläche eines Deckels das Nutzvolumen des Hohlkolbens fest. Erfindungsgemäße Abstandshalter können ein- oder mehrteilig sein, sie können als koaxialer Stab ausgebildet sein oder als Wand, bzw. Wandabschnitt zwischen den Deckeln nach Art einer Mantel(teil)fläche ausgebildet sein. Ein erfindungsgemäßer Abstandshalter ist auch einer, der im Querschnitt gesehen linear oder gebogen oder drei- oder vierarmig sternförmig ausgebildet ist und damit den Raum zwischen den beiden Stirnseitendeckeln zwei, drei, bzw. vierteilt, um so unterschiedliche Teilvolumina zu schaffen. Die Stirnseitendeckel sind dabei bevorzugt im Querschnitt kreisförmig ausgebildet, können erfindunsgemäß jedoch auch andere Querschnittsflächen aufweisen, beispielsweise in Form eines n-Ecks oder in Form einer, insbesondere ebenen, rundlichen konvexen Fläche.

Ist ein Stirnseitendeckel aus einem hochlegierten Stahl, insbesondere einem rostfreien Edelstahl bestehend, so ist er autoklavierbar und mechanisch kaum zu beschädigen, jedenfalls nicht im normalen, möglicherweise rauen Umgang während des Einsatzes. Gleichzeitig machen ein oder beide so ausgestaltete Deckel den erfindungsgemäßen Hohlkolben schwer genug, um schwerkraftgetrieben von sich aus in der zweiten Position zu sein, in der sein Hohlraum gegen das Vorratsvolumen gedichtet ausgebildet ist. Hierdurch ist mit Vorteil eine Rückholvorrichtung, wie eine Feder oder dergleichen, überflüssig. Der Hohlkolben muß also erfindungsgemäß bewußt betätigt werden, um in die erste Position, die Füllposition, verbracht zu sein. Mit anderen Worten ist die zweite Position als seine kräftefreie Ruhelage ausgebildet.

Der erfindungsgemäße Abstandshalters ist als Zylindermantelabschnitt und/oder als ein oder mehrere Stege ausgebildet. Wie bereits geschildert, kann der Abstandshalter als Teil eines Zylindermantels ausgebildet sein, also entsprechende Öffnungen in seiner Mantelfläche aufweisen. Dies erfasst erfindungsgemäß auch Ausgestaltungen, bei der der Zylindermantelabschnitt beispielsweise als voneinander radial beabstandte Stege zwischen den beiden Deckeln ausgebildet ist, wobei diese Stege auch in ihrer Länge in unterschiedlicher Weise zweigeteilt ausgebildet sein können. Dies ermöglicht insbesondere eine manuelle Einstellbarkeit des Hohlraumvolumens, da eine Verdrehung eines Deckels gegen den anderen dazu führt, dass sich der Abstand zueinander verändernd ist. Die erfindungsgemäßen Stege können dabei den Hohlraum in mehrere Untervolumina teilend sein, insbesondere dann, wenn sie die Querschnittsfläche vollständig durchsetzend sind.

Die Stege sind miteinander verbunden und/oder in ihrer Längsachse ein- oder mehrfach geteilt und/oder mit einem Stirnseitendeckel verbunden ausgebildet Diese spezielleren Ausführungsformen ermöglichen eine Einstellbarkeit des Hohlraumvolumens und werden weiter unten bei der Figurenbeschreibung noch genauer erläutert werden.

Ist der Rohrabschnitt zylindrisch ausgebildet und weist an seinem vorratsvolumenabgewandten Ende mindestens eine erste Wandöffnung auf und /oder an seinem vorratsvolumenseitigen Ende mindestens eine zweite Wandöffnung, so ist mit Vorteil erreicht, dass die im Dosiervolumen befindliche Reinigungslösung nicht schwallartig sondern langsam und kontrolliert ausfließend ist und somit sauber und annähernd spritzfrei aufgetragen wird. Hierbei wird unter den genannten ersten und zweiten Positionen nicht zwingend eine exakte, örtlich genau festgelegte Position verstanden, sondern vielmehr vor allem eine funktionale Position, in der eine Füllung des Dosiervolumens erfolgend ist und entsprechend, in der zweiten Position, eine Entleerung, insbesondere die geschilderte, kontrollierte, nicht schwallartige Entleerung. Die Öffnungen sind daher als Durchgangsöffnungen in der Wandung ausgelegt, insbesondere als mit ihrer Unterkante fluchtend mit der dosiervolumenseitigen Fläche des unteren Stirnseitendeckels, so dass eine vollständige Entleerung und Übertragung der dosierten Reinigungsmittelmenge ermöglicht ist.

In Weiterbildung der Erfindung ist vorgesehen, dass das es mehr als einen Hohlkolben aufweist, insbesondere mehrere Hohlkolben, die sich in jeweils in ihrem Dosiervolumen unterscheiden, bevorzugt aufgrund von unterschiedlichen Abstandshaltervolumina. Die hiermit ebenfalls erreichte Einstellbarkeit eines Dosiervolumens ist so einfach durch anwenderseitigen Austausch eines Hohlkolbens gegen einen anderen ermöglicht. Die erfindungsgemäß dann vorgehenen, unterschiedlichen Hohlkolben sind in ihren Außenmaßen möglichst identisch, die Änderung des Dosiervolumens wird erreicht durch Änderung des Abstandshaltervolumens, also anders ausgedrückt durch dickere oder dünnere Abstandshalter, wobei diese bevorzugt als säulenartige Abstandshalter, insbesondere koaxial zur Längsachse des Hohlkolbens ausgebildet sind und damit bevorzugt eine kreisförmige oder kreisartige Querschnittsfläche aufweist. Er ist so als einfaches Dreh-, Fräs- oder auch Spritzgußteil herstellbar.

In Ausgestaltung des Dosiersystems ist vorgesehen, dass ein Stirnseitendeckel ein Kompensationsgewicht aufweist, insbesondere ein derart angeordnetes Kompensationsgewicht, dass es in der zweiten Position auf einem vorratsvolumenseitigen Rand des Rohrabschnitts aufliegend ist. Ein solches Kompensationsgewicht gleicht mit Vorteil die unterschiedlichen Gewichte der einzelnen Hohlkolben aus, die sich aufgrund der unterschiedliche Abstandshaltervolumina voneinander unterscheiden. Hierdurch haben alle unterschiedlichen Hohlkolben im gefüllten Zustand dasselbe Gewicht und bewegen sich damit gleichartig, wodurch ein Anwender stets dieselbe Bedienroutine ausführen kann. Gleichzeitig stellt das Aufliegen des oberen Stirnseitendeckels, bzw. dessen Kompensationsgewichts in der unteren, zweiten Position des Hohlkolbens sicher, dass dieser nicht nach unten durch den zylindrischen Rohrabschnitt austreten kann und auch stets vollständig entleerbar ist, da sich kein Totvolumen durch zu tiefes Absinken zwischen unterer Kante der Wandöffnung(en) und der Oberseite des unteren Stirnseitendeckels bilden kann. Die erfindungsgemäßen Hohlkolben bewegen sich bevorzugt schwerkraftgetrieben nach unten, unabhängig von Befüllungszustand. Die Massenzunahme durch die Füllung des Dosiervolumens unterstützt diese Bewegung.

Ist erfindungsgemäß eine zu dem Vorratsvolumen beabstandete Auffangwanne vorgesehen, so ist mit großem Vorteil ein Befeuchten eines Moppbezugs ermöglicht, ohne dass eventuell herabtropfende Reinigungslösung in die Umgebung verspritzt würde, sondern diese vielmehr sauber aufgefangen wird.

In Ausgestaltung der Erfindung ist vorgesehen, dass ein auf den Hohlkolben wirkendes Betätigungselement vorgesehen ist, insbesondere ein mechanisch wirkendes Betätigungselement, bevorzugt ein rein mechanisch wirkendes, wobei der Hohlkolben ein Kontaktelement zu dessen Wirkende aufweist. Ein solches Betätigungselement ist dazu ausgebildet, den Hohlkolben von einer in eine andere Position zu bewegen. Hierbei kann diese eine Position die beschriebene erste oder die beschriebene zweite Position sein, wobei diese andere Position dann die jeweils verbliebene beschriebene Position ist. Im einfachsten Fall ist erfindungsgemäß vorgesehen, dass das Betätigungselement den Hohlkolben von der zweiten, der Ruheposition, in die erste Position, der Befüllposition verbringend ist und dieser anschließend schwerkraftgetrieben wieder in die Ausgangslage dieser Bewegung zurückgleitend ausgebildet ist. In diesem Fall wird nur eine Bewegung aktiv seitens eines Benutzers ausgeführt. Selbstverständlich ist es auch erfindungsgemäß, wenn die Hohlkolbenbewegung vollständig vom Betätigungselement angetrieben ist, dieses den Hohlkolben also von einer in die andere Position und zurückbewegend ausgebildet ist. Bevorzugt sind rein mechanisch wirkende Beätigungselemente, beispielsweise eine unter einem Boden des Vorratsbehälters geführte Welle, die seitlich am Vorratsbehälter in einem von dort bedienbaren Handrad oder Hebel oder Griff endend ist und die beispielsweise eine Nocke im Bereich des Hohlkolbens aufweist, mit der eine Kraft auf denselben übertragbar ist. Bevorzugt ist auch, dass nur eine Kolbenbewegung von einem Benutzer gewollt angetrieben erfolgend ist.

In Ausgestaltung der Erfindung ist ein auf den Hohlkolben wirkendes Betätigungselement vorgesehen, insbesondere ein mechanisch wirkendes Betätigungselement, bevorzugt ein rein mechanisch wirkendes, wobei das Betätigungselement in der Auffangwanne angeordnet ist, und ein auf den Hohlkolben wirkendes Wirkende aufweist, wobei die Auffangwanne bevorzugt beabstandet zu einem vom Vorratsvolumen entfernten Ende des Rohrabschnitts ausgebildet ist und wobei das Betätigungselement bevorzugt an der Auffangwanne angelenkt ausgebildet ist, insbesondere ein zwischen Betätigungselement und Wirkende ein Kipphebel angeordnet ist. Der Betätigungshebel ist rein mechanisch auf den Hohlkolben wirkend, insbesondere mittels eines an ihm angeordneten Wirkendes, welches beispielsweise eine gelenkige Verbindung zu dem Hohlkolben ist. Das auströmende Reinigungsmittelvolumen wird in der Auffangwanne aufgefangen und ist dort dem Moppbezug zugänglich, so dass ein spritzfreies Befeuchten des Moppbezuges ermöglicht ist. Ein Benutzer ist demnach den Betätigungshebel mit dem aufgezogenen Moppbezug betätigend und kann das Reinigungsmittel nach seinem Ausströmen aufnehmen. Die Fallhöhe ist dabei bevorzugt so ausgewählt, dass ein Verspritzen möglichst verhindert, verstärkt durch eine entsprechende Dimensionierung der Aufwangwanne und deren Seitenwandhöhen oder durch das Vorsehen eines Prallbleches oder ähnlichem. Ist das Betätigungselement an der Auffangwanne angelenkt ausgebildet, ist eine konstruktiv einfache und bediensichere Ausgestaltung des Betätigungsmechanismus des Hohlkolbens gefunden. Ist zwischen Betätigungselement und Wirkende ein Kipphebel angeordnet, ist ein konstruktiv einfacher bediensicherer und einfach zu reinigender, insbesondere autoklavierbarer Kraftübertrager gefunden. Ist das entfernte Ende des Auslassrohres eine Auslassöffnung im Rohrmantel aufweisend, wird mit Vorteil nicht nur ein Ausfließen des im Volumen des Hohlkolbens befindlichen Reinigungsmittels über den in der zweiten Position freiliegenden Rand des unteren Deckels ermöglicht, vielmehr kann dieses Volumen auch durch die Rohrwand abfließen, was die das Entleeren des Hohlkolbens schneller und weniger turbulent macht, was wiederum ein sauberes und schnelles Arbeiten ermöglichend ist.

Schließlich ist noch vorgsehen, dass der Hohlkolben ein Kontaktelement zu dem Wirkende aufweist. Dieses Kontaktelement ist erfindungsgemäß gleichzeitig auch das Wirkende führend ausgebildet, also ein Kontakt- und Führungselement, welches als Nut, Steg, Bahn, Kulisse oder ähnliches ausgebildet sein kann. Entscheidend ist, dass der Hohlkolben mit Kontaktelement nicht mit der Betätigungsvorrichtung verbunden oder allensfalls lösbar verbunden ist, damit die Betätigungsvorrichtung unabhängig von dem Hohlkolben aus der Vorrichtung entnehmbar ist.

In Ausgestaltung des Dosiersystems ist weiter vorgesehen, dass es zur Wandmontage ausgebildet ist, und/oder einen Deckel aufweist und/oder eine Druckausgleichsvorrichtung. Eine solche Wandmontage ist immer dann vorteilhaft, wenn relativ kleine Räume, wie beispielsweise in Apotheken, gereinigt werden müssen. Aufgrund dieser örtlichen Gegebenheiten oder der gewünschten Reinigungsabläufe ist es dann erfindungsgemäße, das Vorratsvolumen stationär anzuorden, beispielsweise per Wandhalterung. In diesem Fall ist der bereits beschriebene Deckel nicht fakultativ, sondern zwingend erforderlich, um das Vorratsvolumen abgedeckt und von der Umgebung weitestgehend abgeschlossen zu halten. Eine einmal angesetzte Reinigungslösung im Vorratsvolumen stünde so ggf. für Tage zur Verfügung. Bei dieser Ausführungsform ist auch eine Druckausgleichsmöglichkeit am Deckel und/oder Vorratsvolumen angeordnet, ggf. auch mit Luftfilter, um so die Entnahme der Reinigungsflüssigkeit bei sich langsam leerendem Vorratsvolumen nicht zu behindern. Die bereits beschriebenen weiteren Bauteile der Dosiervorrichtung sind auch bei dieser Ausführungsform vorhanden, ggf. ebenfalls in Wandmontage.

Die Verfahrensaufgabe wird gelöst durch ein Verfahren zum Dosieren von Reinigungslösung aus einem Vorratsvolumen auf einen Reinigungsgegenstand, bei dem ein in einem Rohrabschnitt linear beweglicher Hohlkolben ein Dosiervolumen aufweist, wobei das Dosiervolumen in einer ersten Position des Hohlkolbens mit dem Vorratsvolumen in Kontakt steht, in dieser ersten Position Reinigungslösung in das Dosiervolumen läuft und sich der Hohlkolben schwerkraftgetrieben in Richtung einer zweiten Position bewegt, in der zweiten Position die im Dosiervolumen befindliche Reiniungslösung durch wenigstens eine erste Wandöffnung des Rohrabschnitts auf einen Reinigungsgegenstand austritt.

In Weiterbildung des Verfahrens ist vorgesehen, dass der Hohlkolben von der zweiten Position angetrieben in die erste Position verbracht wird, insbesondere manuell angetrieben.

Weiter ist vorgesehen, dass das Dosiervolumen einstellbar ist durch Verwenden eines anderen Hohlkolbens mit einem anderen Dosiervolumen oder durch Veränderung des Dosiervolumens eines Hohlkolbens.

Die entsprechenden Vorteile wurden bereits bei der Vorrichtung erläutert. Der so ermöglichte Arbeitsprozeß führt dazu, dass das Abheben des befeuchteten und damit einsatzbereiten Mopps von der Betätigungseinrichtung diese in ihre Ruheposition zurückgleiten läßt, was mit dem gleichzeigiten Zurückgleiten des gefüllten Kolbens in die zweite Position verbunden ist, wodurch die Auffangwanne erneut gefüllt wird. Damit steht einem Benutzer eine dosierte Menge Reinigungsflüssigkeit für den nachfolgenden Befeuchtungsvorgang zur Verfügung. Lediglich beim allerersten Dosiervorgang eines Arbeitstages muß ein Benutzer für die Befeuchtung seines Moppbezuges auf die Füllung und Bewegung des Hohlkolbens warten. Bei jeder nachfolgenden Befeuchtung führt der Benutzer seinen frischen Moppbezug in die Auffangwanne ein und drückt dabei den leeren Hohlkolben mittels der Betätigungseinrichtung nach oben in seine erste Position. Während die in der Auffangwanne befindliche Reinigungsflüssigkeit in den Moppbezug aufgenommen wird, füllt sich das Doslervolumen. Beim Entfernen des korrekt befeuchteten Moppbezuges gleitet der Hohlkolben in seine zweite Position, verschließt damit das Vorratsvolumen und gibt die dosierte Reinigungsflüssigkeitsmenge wie geschildert in die Auffangwanne ab.

Ein Zeitverzug beim Befeuchten wird so mit sehr großem Vorteil vermieden. Ein Benutzer muß einzig auf die Aufnahme der Flüssigkeit in seinen Moppbezug abwarten. Vor der letzten Befeuchtung eines Arbeitsvorganges entnimmt der Benutzer die Betätigungsvorrichtung aus der Aufwangwanne und ordnet diese vorzugsweise am Reinigungswagen oder an der Wand an. Hierdurch ist eine weitere Hohlkolbenbewegung verhindert, dieser verbleibt mit entleertem Dosiervolumen in seiner zweiten Position, der Ruheposition. Der Benutzer befeuchtet dann seinen Mopp mit der seit dem vorherigen Befeuchtungsvorgang bereits in der Auffangwanne befindlichen, dosierten Reinigungsflüssigkeitsmenge, wonach diese weitestgehend entleert ist und führt den Reinigungsvorgang aus.

Die Erfindung wird in einer bevorzugten Ausführungsform unter Bezugnahme auf eine Zeichnung beispielhaft beschrieben, wobei weitere vorteilhafte Einzelheiten den Figuren der Zeichnung zu entnehmen sind.

Funktionsmäßig gleiche Teile sind dabei mit denselben Bezugszeichen versehen.

Die Figuren der Zeichnung zeigen im Einzelnen:
- Fig. 1:: eine erfindungsgemäße Vorrichtung in erster Ausführungsform an einem Reinigungssystemwagen,
- Fig. 2:: die erfindungsgemäße Betätigung der Vorrichtung in erster Ausführungsform,
- Fig. 3:: eine erste Ausführungsform des erfindungsgemäßen Hohlkolbens in drei Teilfiguren a), b) und c),
- Fig. 4:: eine zweite Ausführungsform des erfindungsgemäßen Hohlkolbens in drei Teilfiguren a), b) und c),
- Fig. 5:: eine dritte Ausführungsform des erfindungsgemäßen Hohlkolbens in zwei Teilfiguren a) und b) und
- Fig. 6:: Eine Detailansicht des erfindungsgemäßen Vorratsvolumens und
- Fig. 7:: eine bevorzugte Ausführungsform der Erfindung an einem Reinigungssystemwagen,
- Fig. 8:: eine bevorzugte Ausführungsform des Rohrabschnitts und
- Fig. 9:: eine vierte und bevorzugte Ausführungsform des erfindungsgemäßen Hohlkolbens in zwei Teilfiguren a) und b).

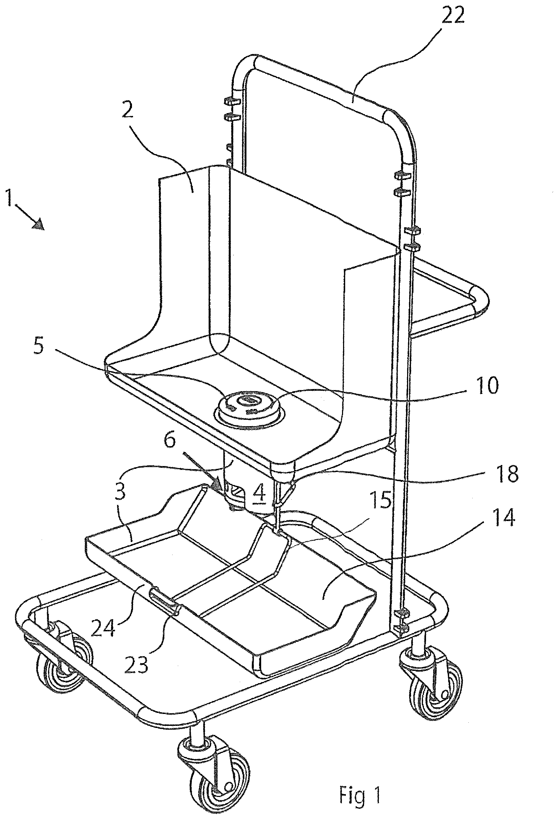

**Fig. 1** zeigt die Anordnung der Erfindung auf einem vereinfacht dargestellten Reinigungssystemwagen 22, bei dem der Übersicht halber nur eine Ausführungsform des erfindungsgemäßen Dosiersystems 1 dargestellt ist. Erfindungsgemäß wäre auch die Anordnung auf einem größeren Reinigungssytemwagen 22, der dann weitere Behälter, Geräte und Vorrichtungen aufwiese. Anstelle einer Anordnung auf einem solchen Reinigungssystemwagen 22 wäre auch eine Wandmontage der Dosiervorrichtung erfindungsgemäß, falls diese aufgrund der örtlichen Gegebenheiten oder der gewünschten Reinigungsabläufe beispielsweise stationär benötigt wird. In diesem Fall wäre der beschriebene Deckel nicht fakultativ, die so abgedeckte und von der Umgebung weitestgehend abgeschlossene Reinigungslösung im Vorratsvolumen stünde so ggf. für Tage zur Verfügung. In diesem Fall wäre erfindungsgemäß auch eine Druckausgleichsmöglichkeit am Deckel und/oder Vorratsvolumen angeordnet, ggf. auch mit Luftfilter, um so die Entnahme der Reinigungsflüssigkeit bei sich langsam leerendem Vorratsvolumen nicht zu behindern.

Das erfindungsgemäße Dosiersystem 1 weist im Wesentlichen zwei Baugruppen auf, zum einen das hier teilweise geschnitten dargestellte Vorratsvolumen 2 mit Rohrabschnitt 4 und einem in diesem gleitend angeordneten Hohlkolben 5 und zum anderen eine Auffwangwanne 14, mit Abstand angeordnet unterhalb eines, vom Vorratsvolumen 2 entfernteren, unteren Endes 17 des Rohrabschnitts 4. In der Auffangwanne 14 ist ein Betätigungselement 15 zu erkennen, welches in einer Aussparung 23 der vorderen Wand 24 der Auffangwanne 14 eingelegt und damit lösbar an dieser angelenkt ist. Dieses Betätigungselement 15 ist ein, insbesondere aus Edelstahl gebildetes, Drahtgestänge welches über Kunststoffverbinder oder Drahtbügel per Gestänge 25 mit einem Kipphebel 18 verbunden ausgebildet ist. Ein Benutzer betätigt das Dosiersystem 1, indem er die mit einem Moppbezug bespannte Wischerplatte eines Mopphalter zwischen diese beiden Baugruppen verbringt und auf das Betätigungselement 15 drückt. Dieses ist dann den Hohlkolben 5 in eine erste Position verbringend, in der der Hohlraum 6 des Hohlkolbens 5 für eine im Vorratsvolumen 2 im Benutzungsfall befindliche Reinigungslösung zugänglich ist. Übt der Benutzer keinen Druck mehr aus, ist der Hohlkolben 5 schwerkraftgetrieben in eine zweite Position zurückgleitend, die seine Normal- bzw. Ausgangsposition darstellt. In dieser ist sein Hohlraum 6 mit einer Umgebung der Vorrichtung 1 verbunden ausgebildet. Dies zeigt **Fig. 1** sehr deutlich. Mit anderen Worten ist die erste Position bei dieser Ausführungsform diejenige, in der der Hohlkolben 5 angehoben ist, so dass sein hier sichtbarer Stirnseitendeckel 10 deutlich oberhalb des Bodens des Vorratsvolumens 2 befindlich ist und Reinigungsmittel in den Hohlraum strömen kann. Das Vorratsvolumen 2 kann selbstverständlich mit einem Deckel versehen sein, der es nach oben hin abschließt, insbesondere dichtend abschließt, so dass kein Schmutz und keine Gegenstände hineinfallen können. Erfindungsgemäß ist auch eine Ausführungsform, bei der beispielsweise eine oder mehrere Kanäle vom Vorratsvolumen 2 zu dem Rohrabschnitt 4 führend und dessen Wand durchdringend sind, so dass sie seitlich zu dem Hohlkolben 5 führend sind und ein seitliches Einströmen ermöglicht ist. Der Erfindung wichtig ist in erster Linie eine gegenüber dem Zutritt von Reinigungslösung in den Hohlraum 6 gedichtete und eine dafür zugängliche Position des Hohlkolbens 5 relativ zum Vorratsvolumen 2.

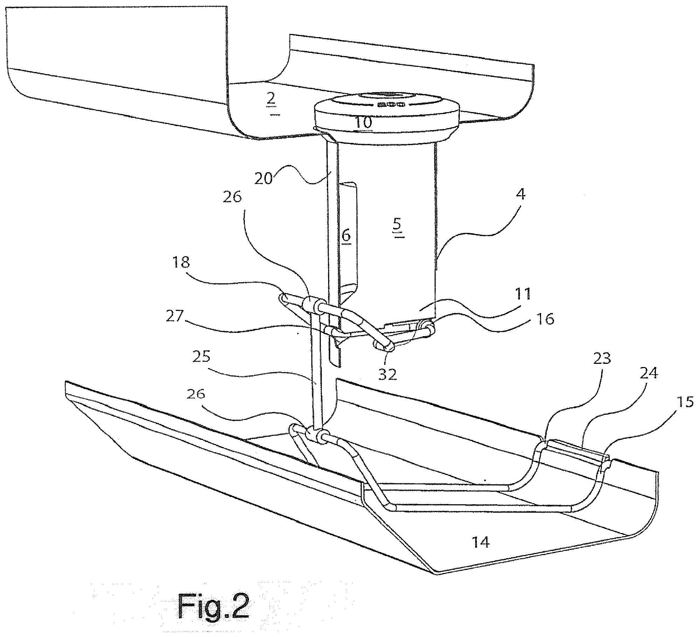

**Fig. 2** zeigt als Ausschnitt in mehrfach geschnittener Weise die Auffangwanne 14 mit Aussparung 23 in der vorderen Wand 24, in die das Betätigungselement 15, hier in Form eines Drahtbügels, eingelegt und angelenkt ist. Der Drahtbügel bildet eine Druckplatte, die hier jeweils mittels Kunststoffverbindern 26 über ein Gestänge 25 mit einem Kipphebel 18 verbunden ausgebildet ist. Der Kipphebel 18 ist in einer Durchführung 27 des Rohrmantels 20 um eine Drehachse drehbar gelagert und wirkt mit einem Wirkende 16 auf den Hohlkolben 5, insbesondere auf dessen unteren Stirnseitendeckel 11, genauer auf ein Kontaktelement 21, welches hier als Führungsnut 32 ausgebildet ist. In Fig. 2 ist der Hohlkolben 5 geschnitten dargestellt, wobei die Schnittebene durch die Führungsnut 32 verlaufend ist und wobei der untere Stirnseitendeckel 11 einstückig zu dem Hohlkolben 5 ausgebildet ist. Gut zu erkennen ist auch die Dichtsituation zwischen Boden des geschnitten dargestellten Vorratsvolumens 2, dem oberen Stirnseitendeckel 10 und dem Übergang zwischen Rohrabschnitt 4 und diesem Boden. Ggf. vorhandene Dichtungen sind weggelassen.

Die Drehachse wird durch die beiden aufeinander zuweisenden Abschnitte des als Drahtbügel ausgebildeten Kipphebels 18 gebildet, die jeweils die den Rohrmantel 20 durchsetzend sind. Die dargestellte Position des Hohlkolbens 5 entspricht seiner zweiten Position, die auch als unterer Totpunkt zu bezeichnen ist oder als Ruhelage.

Nicht dargestellt ist die erfindungsgemäße Variante, bei der das Betätigungselement 15 ein unter dem Vorratsvolumen geführtes und insbesondere seitlich herausragendes mechanisches Betägigungselement ist, wie beispielsweise in Welle mit Nocken und Bediengriff wie Hebel oder Rad oder ein nach unten geführtes Betätigungselement wie ein Pedal oder Fußtaster ist. Der Erfindung ist die genaue Ausführung des Betätigungselements nicht zwingend bedeutsam, solange es bevorzugt eines ist, welches mechanisch betätigbar ist, um keine elektrische Versorgung vorsehen zu müssen. Weitere zu berücksichtigende Gesichtspunkte sind ein sicherer Stand eines Benutzers, eine geringstmögliche Stellungsänderung des Bedieners zur Vorrichtung während deren Bedienung und wenn möglich auch eine möglichst handberührungsfreie Bedienung, um auch Anforderungen von Reinräumen erfüllen zu können. Selbst ein motorisches Betätigungselement wäre erfindungsgemäß, wenn es trotz der Nachteile die anderen Gesichtspunkte möglichst vollständig berücksichtigt.

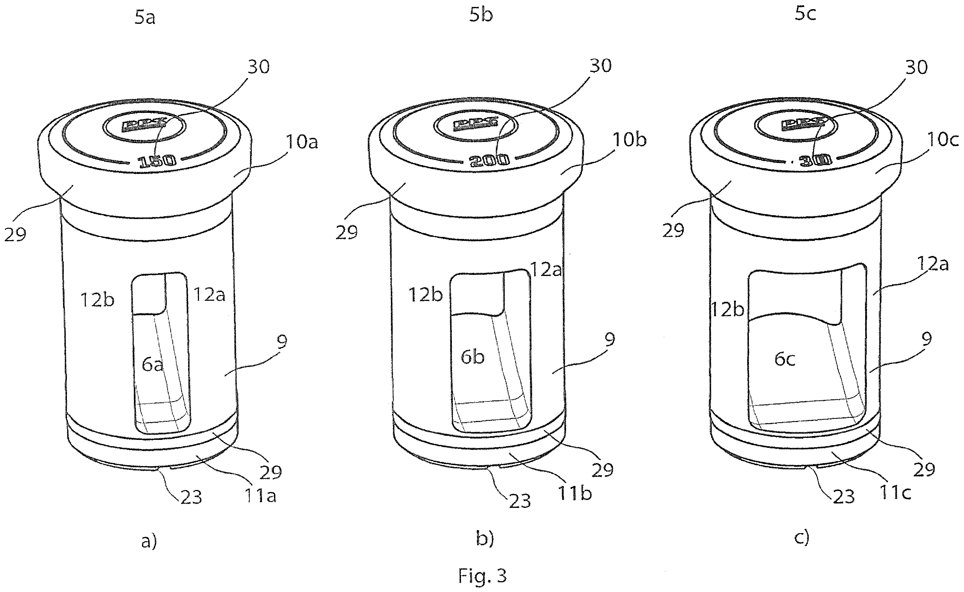

**Fig. 3** zeigt eine Ausführungsform des erfindungsgemäßen Hohlkolbens in drei Teilfiguren a), b) und c). Bei dieser Ausführungsform weist die Dosiervorrichtung 1 drei gegeneinander austauschbare Hohlkolben 5a, 5b und 5c auf, die jeweils gleich aufgebaut sind, jedoch zueinander unterschiedlich dimensionierte Hohlräume 6a bis 6c aufweisen. Ein unterer Stirnseitendeckel 11a-c ist hier jeweils stoffschlüssig mit einem zweiteiligen Abstandshalter 9a-c verbunden, von denen jeder Teil als Zylindermantelabschnitt 12a-c mit voneinander unterschiedlichen Wandstärken ausgebildet ist. Diese Zylindermantelabschnitte sind im Querschnitt gesehen jeweils als Kreissegment ausgebildet. Eine Auslaufschräge 28a-c ist ein kontrolliertes Ausfließen von ihm Hohlraum 6 enthaltener Reinigungslösung ermöglichend, wobei die Größe der Hohlräume 6a-c jeweils durch die unterschiedlichen Wanddicken der Zylindermantelabschnitte 12a-c definiert ist. Im Bereich des unteren und des oberen Stirnseitendeckels 11, 10 ist jeweils eine Dichtung 29 angeordnet, die den Hohlkolben 5a-c gegen die nicht dargestellte Innenwand des Rohrabschnitts 4 dichtend ausgebildet ist. Der obere Stirnseitendeckel 10a-c ist aus Edelstahl, bzw. einem hochlegierten, nicht rostenden und autoklavierbaren Stahl gebildet und zeigt erfindungsgemäß jeweils eine Markierung 30 zur Volumenangabe.

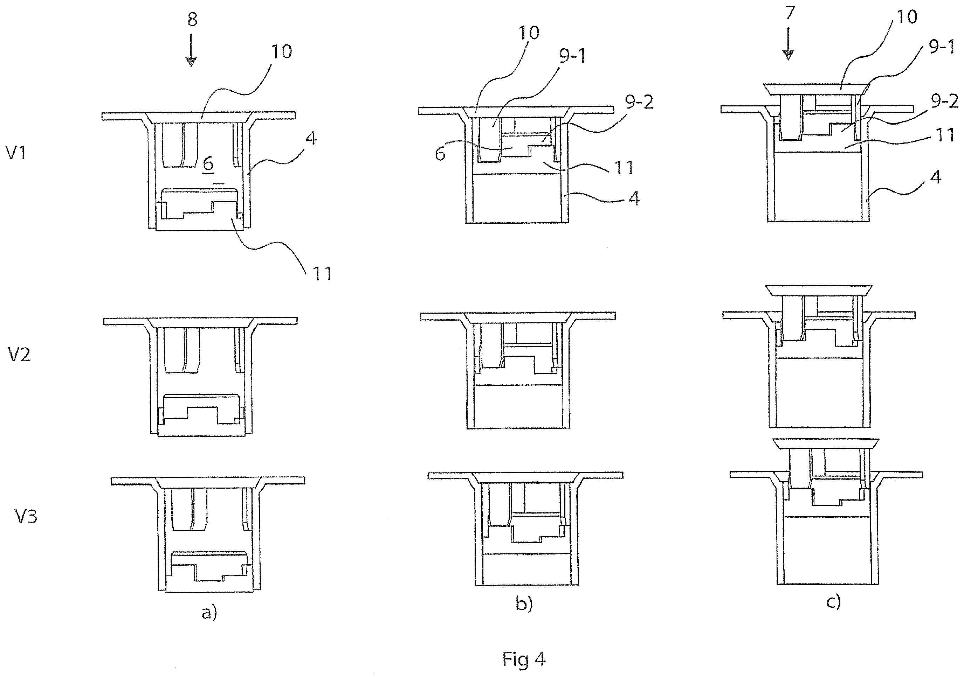

**Fig. 4** zeigt in drei Teilfiguren 4a) bis c) eine zweite Ausführungsform des erfindungsgemäßen Hohlkolbens 5, jeweils in drei Positionen. Bei dieser Ausführungsform weist die erfindungsgemäße Dosiervorrichtung 1 nur einen Hohlkolben 5 auf, dessen Hohlraum 6 in seiner Größe einstellbar ausgebildet ist. Dies ist erfindungsgemäß dadurch erreicht, dass drei, in ihrer Länge unterschiedlich geteilt ausgebildete, Abstandshalter 9 vorgesehen sind, die mittels eines Verdrehens der beiden Stirnseitendeckel 10, 11 gegeneinander gleichzeitig deren Abstand zueinander verändernd sind. In der dargestellten Ausführungsform wird ein größerer Teil der axialen Länge der Abstandshalter 9 und damit des Abstandes zwischen den beiden Stirnseitendeckeln 10, 11 durch erste Abstandshalterabschnitte 9-1 verwirklicht, die am oberen Stirnseitendeckel 10 angeformt und zueinander gleichlang ausgebildet sind. Zweite Abstandshalterabschnitte 9-2 sind am unteren Stirnseitendeckel 11 angeformt und weisen zueinander unterschiedliche Längen auf, insbesondere sind mehr untere Abstandshalterabschnitte 9-2 als obere Abstandshalterabschnitte 9-1 vorgesehen, wobei jeweils n Abstandshalter 9-1 und 2n oder 3n untere Abstandshalter 9-2 vorgesehen sind. Hierdurch lassen sich mit Vorteil zwei oder drei Volumina realisieren. Erfindungsgemäß ist eine Verdrehsicherung der beiden Stirnseitendeckel 10, 11 gegeneinander vorgesehen, die im bevorzugten einfachsten Fall dadurch gebildet ist, dass ein unterer Abstandshalter 9-2 kürzerer aixaler Länge von zwei axial längeren Abstandshaltern 9-2 eingerahmt ausgebildet ist. Für den unteren Abstandshalter 9-2 mit der größten axialen Länge kann einseitig ein Anschlag als Verdrehsicherung angeformt sein. Die Einstellung der Größe des Hohlraums 6 ist dabei in oberer Totlage des Hohlkolbens ermöglicht, also in dessen erster Position 7, bei der der obere Stirnseitendeckel 10 von einem Benutzer im Vorratsvolumen 2 greifbar ist.

**Fig. 4** zeigt in den drei Zeilen V1, V2 und V3 einen Ablauf von Hohlkolbenpositionen bei drei unterschiedlichen Hohlraumgrößen. Die erste Spalte zeigt jeweils die zweite Position, bei der der innere Hohlraum 6 mit einer Umgebung in Kontakt steht, während der obere Stirnseitendeckel 10 das oberhalb befindliche Reinigungsmittelvolumen dichtend ist. Gut zu erkennen ist, dass der erfindungsgemäße Hohlkolben 5 hier aus zwei voneinander lösbaren und unabhängigen Teilen besteht, die zwischen sich den Hohlraum 6 definieren. Die zweite Spalte zeigt jeweils eine Zwischenposition, bei der ein Bediener das nicht dargestellte Betätigungselement 15 betägigt und damit den unteren Stinrseitendeckel 11 mittels des Wirkendes 16, geführt in der Führungsnut 32 (siehe Fig. 2) im Rohr in Richtung auf den oberen Stirnseitendeckel 10 bewegt hat. Der untere Stirnseitendeckel 11 ist somit den Rohrabschnitt 4 dichtend gegen die Umgebung. In der dritten, rechten Spalte ist die erste Position dargestellt, bei der der Hohlraum 6 aus dem nicht dargestellten Vorratsvolumen 2 für Reinigungslösung zugänglich ist. Dies ist mit einem Pfeil angedeutet. Zu erkennen ist auch, dass Volumen V1 kleiner ist als das Volumen V2 welches kleiner ist als das Volumen V3, jeweils erzeugt durch die Einstellung der axialen Gesamtlänge der drei radial gleichbeabstandeten Abstandshalter 9, die jeweils aus einem oberen und einem unteren Teilabstandshalter 9-1, 9-2 bestehen, die jeweils eine axiale Teillänge aufweisen.

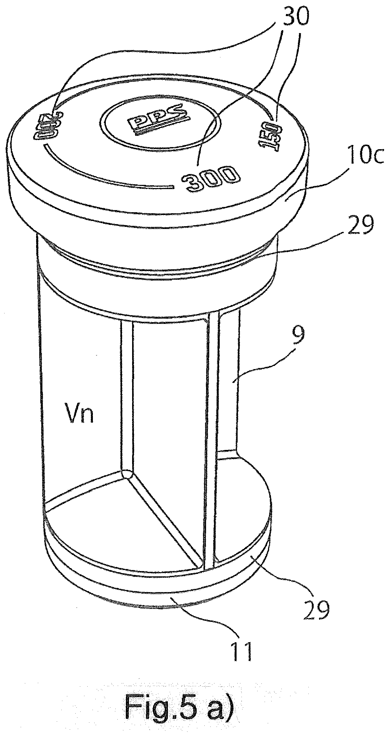

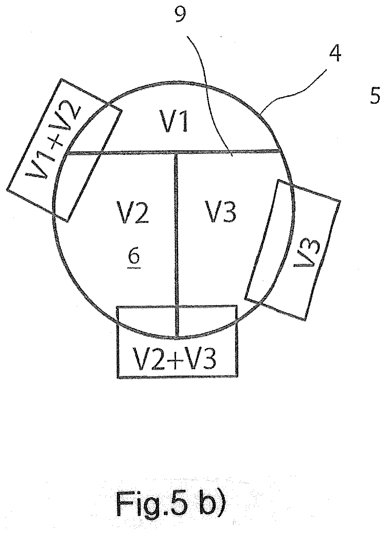

**Fig. 5** zeigt eine dritte Ausführungsform des erfindungsgemäßen Hohlkolbens 5 in zwei Teilfiguren a) und b). Bei dieser Ausführungsform ist der Abstandshalter 9 zwischen dem oberen und dem unteren Stirnseitendeckel 10, 11 als im Querschnitt sternförmig verzweigter Steg ausgebildet, der den Hohlraum 6 in gleiche oder ungleiche Teilvolumina Vₙ teilend ist, dargestellt sind zwei gleiche und ein unterschiedliches Teilvolumen, letzteres nicht sichtbar hinter rückwärtigen Wand des Abstandshalters 9. Dieser Steg erstreckt sich über den gesamten Abstand zwischen den beiden Stirnseitendeckeln 10, 11 und weist geschlossene Wände auf. Somit weist dieser Hohlkolben 5 einen unveränderlichen Abstand zwischen oberem und unterem Stirnseitendeckel 10, 11 auf. Zu erkennen sind jei ein Dichtring 29 im Übergangsbereich des oberen bzw. unteren Stirnseitendeckels 10, 11 zu dem Abstandshalter 9.

Allen Ausführungsformen des Hohlkolbens 5 gemeinsam ist, dass das jeweilige Hohlvolumen 6 begrenzt wird durch die Stirnseitendeckel 10, 11, die jeweils dichtend ausgebildet sind, und einer Innenwand des Rohrabschnitts 4, in dem die Hohlkolben 5 gleitend beweglich ausgebildet sind. Damit ist zwar ein Hohlkolben 5 für sich alleine nicht verwendbar, jedoch wird so Material gespart und die Deckel können als einfache Drehteile mit geschlossenen, glatten Oberflächen ausgestaltet sein. Auch bei dieser Ausführungsform ist das Dosiervolumen einstellbar durch Drehen, diesmal jedoch des gesamten Hohlkolbens 5 relativ zu einer Auslassöffnung 19 des Rohrmantels 20 des Rohrabschnitts 4: Ist der Hohlkolben 5 durch einen Benutzer so gedreht, dass die Auslassöffnung 19 zwei Teilvolumina überdeckt, addieren sich deren jeweilige Teilvolumina zu einem Gesamtreinigungsmittelvolumen, wie in Teilfigur b) dargestellt.

Teilfigur b) der **Fig. 5** zeigt einen schematischen Querschnitt durch den sternförmigen Abstandshalter 9. Zu erkennen sind drei Teilvolumina V1 bis V3, die sich zu einem Gesamtvolumen addieren und zusammen den Hohlraum 6 bildend sind. Mit diesen drei Teilvolumina sind somit fünf Reinigungsmittelvolumina realisierbar, nämlich V1, V2, V3, V1 + V2 und V2 + V3, beispielsweise 50 ml, 150 ml, 200 ml und 300 ml, was durch Kästchen angedeutet ist. Auch bei dieser Ausführungsform weist der obere Stirnseitendeckel 10 eine Markierung 30 der einzelnen Position auf, die das jeweilige Volumen freigebend sind.

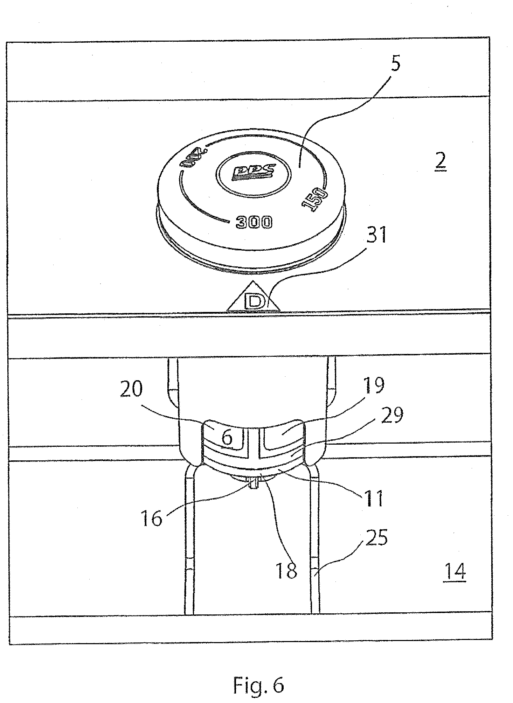

Dies zeigt **Fig. 6** nochmals aus anderer Perspektive. Zu erkennen ist die am Boden des Vorratsvolumens 2 angeordnete Markierung 31, zu der die Markierung 30 fluchtend anzuordnen ist, um das gewünschte Volumen Reinigungslösung abzugeben. Der Hohlkolben 5 ist in seiner zweiten Position dargestellt, bei der der Hohlraum 6 mit der Umgebung in Verbindung stehend ist, Zu erkennen sind der untere Dichtring 29 sowie die Auslassöffnung 19 im Rohrmantel 20, das Wirkende 16 des Kipphebels 18 und ein Teil des Gestänges 25. Auffangwanne 14 und Vorratsvolumen 2 sind geschnitten angedeutet.

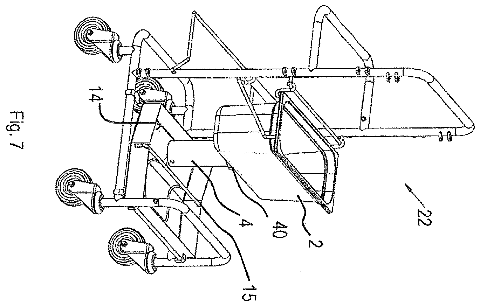

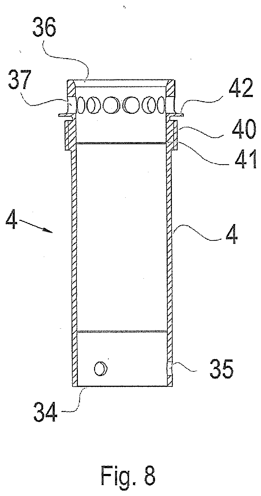

**Fig. 7** zeigt eine bevorzugte Ausführungsform der Erfindung an einem Reinigungssystemwagen 22. Auch bei dieser Ausführungsform ist die Auffangwanne 14 mit an ihr angeordnetem Betätigungselement 15 beabstandet zu einem Vorratsvolumen 2 angeordnet. Auch bei dieser Ausführungsform weist das Betätigungselement 15 ein Wirkende 16 auf, das auf den Hohlkolben 5 wirkend ist. Der hier zylindrische Rohrabschnitt 4 endet im Bereich der Auffangwanne, mithin unterhalb von deren Rand. Dies verhindert ein Verspritzen von Reinigungslösung und ermöglicht damit ein sauberes Arbeiten. Das Betätigungselement 15 ist in Ausnehmungen des Randes der Auffangwanne 14 eingelegt und ist daher zur Reinigung einfach entnehmbar. Die Auffangwanne 14 ist mit einer abgenkickten Bodenfläche ausgebildet, deren schiefer Teil im Bereich des vorratsvolumenabgewandten Endes 34 des zylindrischen Rohrabschnitts 4 angeordnet ist, so dass dort austretende Reinigungsflüssigkeit in Richtung auf einen die Vorrichtung betätigenden Moppbezug strömend ist. Dies stellt ein sauberes Arbeiten genauso sicher wie eine gleichbleibende Befeuchtungsleistung, da die Reinigungslösung stets zum Moppbezug strömt. Details zur bevorzugten Ausführungsform des Rohrabschnitts 4 werden in Fig. 8 näher dargestellt, zu erkennen ist in **Fig. 7** jedoch schon, dass er mittels einer Mutter 40 von unten an einen Vorratsbehälterboden lösbar befestigt ist, insbesondere diesen Boden klemmend befestigt ist. Diese Mutter 40 kann auch eine Überwurfmutter sein. Ebenfalls erfindungsgemäß wäre eine Befestigung mittels Schnellkupplung, Bajonett-Verschluß und ähnlichem.

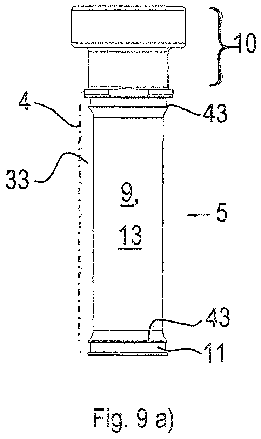

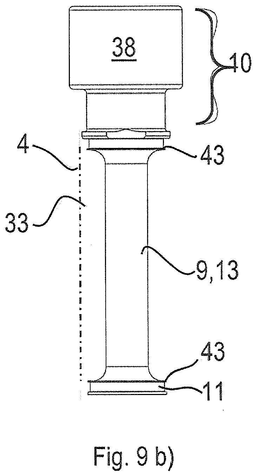

**Fig. 8** zeigt eine bevorzugte Ausführungsform des Rohrabschnitts 4 im Längsschnitt. Das untere, vorratsvolumenabgewandte Ende 34 weist drei erste Wandöffnungen 35 auf, die als Durchgangsbohrungen ausgebildet sind und einen Winkelabstand von 120° zueinander aufweisen. Deren im Vergleich zum Dosiervolumen eher geringe Querschnittsflächensumme stellt mit Vorteil ein eher langsames Entleeren des Dosiervolumens sicher, so dass sauberes Arbeiten ermöglicht ist. Diese ersten Wandöffnungen 35 befinden sich so nahe des vorratsvolumenabgewanden Endes 34, dass sie bündig mit dem oberen Rand eines unteren Stirnseitendeckels 11 abschließend sind (siehe Fig. 9), wodurch ein Totvolumen mit Vorteil vermieden ist. Mit anderen Worten tritt keine Reinigungslösung durch die untere axiale Öffnung des zylindrischen Rohrabschnitts 4 aus, diese ist durch den Hohlkolben 5 gedichtet ausgebildet. Die Anzahl, der Winkelabstand und die Größe dieser ersten Wandöffnungen 35 sind dabei erfindungsgemäß variabel wählbar, solange ein ausreichend langsames Ausströmen gewährleistet ist.

Das obere, vorratsvolumenseitige Ende 36 weist ein Außengewinde 41 auf, auf das die Überwurfmutter 40 schraubbar ist. Oberhalb des Außengewindes 41 sind ein umlaufender Auflagesteg 42 und eine Mehrzahl an zweiten Wandöffnungen 37 angeordnet. Diese Ausführungsform des Rohrabschnitts 4 ist von oben in ein Vorratsvolumen 2 einsetzbar und liegt im eingesetzten Zustand mit dem Auflagesteg 42 auf dessen Boden auf, insbesondere dichtend. Zur lösbaren Befestigung des Rohrabschnitts 4 ist die Mutter 40 vom entgegengesetzten, unteren Ende aufschiebbar und in Richtung auf den Auflagesteg 42 verschraubbar. Wie bereits erwähnt wäre anstelle einer Mutter auch ein Bajonettverschluß, eine Schnellkupplung oder jede andere leicht lösbare und zu reinigende Verbindungsvorrichtung erfindungsgemäß.

Im Benutzungszustand ragt das vorratsvolumenseitige Ende 36 mit seinem Rand und seinen zweiten Wandöffnungen 37 in das Vorratsvolumen hinein. Ein oberer Stirnseitendeckel 10 liegt auf dem Rand auf, jedoch kann in dieser Position noch keine Reinigungslösung in den Hohlkolben 5 gelangen (siehe Fig. 9). Ein schnelles Einströmen der Reinigungslösung ist erfindungsgemäß durch die Vielzahl an zweiten Wandöffnungen 37 und die obere axiale Öffnung des Rohrabschnitts 4 sichergestellt, da durch sämtliche dieser Öffnungen in der ersten Position des Hohlkolbens Reinigungslösung in dessen Dosiervolumen einströmen kann.

**Fig. 9** zeigt eine vierte und bevorzugte Ausführungsform des erfindungsgemäßen Hohlkolbens in zwei Teilfiguren a) und b), jeweils in Seitenansicht. Zu erkennen sind oberer Stirnseitendeckel 10, unterer Stirnseitendeckel 11, Abstandshalter 9, hier als Steg 13, nämlich als säulenartiger, in der Querschnittsfläche runder Steg 13. **Fig. 9a**) zeigt einen Hohlkolben 5 mit kleinem Dosiervolumen 33, gebildet zwischen dem säulenartigen Abstandshalter 9 und einer Wandfläche des zylindrischen Rohrabschnitts 4, hier gestrichelt angedeutet. Zu erkennen sind weiter ein oberer und ein unterer Dichtring 43, die das Dosiervolumen 33 gegen die Wandfläche dichtend sind. Der obere Stirnseitendeckel 10 ist dabei in zwei axiale Bereiche mit unterschiedlichen Radien geteilt, deren radial größerer auf dem Rand des Rohrabschnitts aufliegend ist und deren radial kleinerer im Inneren des Rohrabschnitts angeordnet ist, etwa im Bereich der zweiten Wandöffnungen 37. Der obere Stirnseitendeckel 10 ist damit mit einer deutlich größeren axialen Länge ausgebildet als der untere Stirnseitendeckel 11, da er neben der Dichtfunktion auch eine Gewichts-Kompensationsfunktion und eine schnelle Einströmfunktion erfüllt. Dies zeigt **Fig. 9b****)**.

**Fig. 9b****)** zeigt einen erfindungsgemäßen Hohlkolben 5 mit größerem Dosiervolumen 33, bewirkt durch einen säulenartigen Abstandshalter 9 mit kleinerem Durchmesser. Zu erkennen ist hier insbesondere die Ausgestaltung des oberen Stirnseitendeckels 10 mit einem Kompensationsgewicht 38. Bei dieser Ausführungsform ist die Dichte des Kolbenmaterials deutlich größer als die der Reinigungslösung, so dass das geringere Volumen des säulenartigen Abstandshalters 9 durch das Kompensationsgewicht 38 erfindungsgemäß ausgeglichen wird, damit das Gesamtgewicht eines befüllten Hohlkolbens 5 über alle unterschiedlichen Hohlkolben gleich ist. Hierdurch ist auch deren Absinkverhalten im Rohrabschnitt 4 gleich, ein Benutzer der erfindungsgemäßen Vorrichtung erfährt damit stets dasselbe Verhalten des Systems, unabhängig von der Größe des Dosiervolumens. Der Hohlkolben ist dabei auch im Leerzustand schwerkraftgetrieben in die zweite Position absinkend - oder mit anderen Worten auch jeder unterschiedlich schwere Hohlkolben - jedoch ist eine Gleichartigkeit der Kolben für einen Benutzer vorteilhaft.

Ein solcher Hohlkolben 5 ist als zylindrischer Körper auf einfache Weise als Spritzgußteil herstellbar oder als Dreh- und/oder Frästeil.

Die Erfindung gibt damit ein Dosiersystem mit veränderbarem Dosiervolumen an, indem entweder ein einziger Hohlkolben durch einen einstellbaren Abstand seiner Stirnseitendeckel zueinander durch Veränderung der Länge des oder der Abstandshalter in seinem Dosiervolumen veränderbar ist oder - bevorzugt - durch das Vorsehen mehrere Hohlkolben, die sich bevorzugt nicht in ihren relevanten Außenmaßen, jedoch in ihrem jeweiligen Abstandshaltervolumen und damit im jeweiligen Dosiervolumen unterscheiden und hierbei aber weitestgehend eine gleiche Gesamtmasse aus Hohlkolben und Dosiermenge aufweisen. Diese Ausgestaltung erlaubt mit großem Vorteil die Verwendung ein und derselben Vorrichtung zur Befeuchtung unterschiedlichster Moppbezüge oder allgemeiner mit Reinigungslösung zu kontaktierender Oberflächen, die unterschiedliche Mengen an Reinigungslösung benötigen, Durch die erfindungsgemäße Veränderung der Dosiervolumina des Hohlkolbens werden mit Vorteil konstruktiv aufwendige, schwierig zu reinigende, Dosiervolumeneinstellmechanismen vermieden, insbesondere auch solche mit drehenden Teilen, Antrieben, Anzeigen, zeitabhängigen Öffnungszeiten, etc.. Gerade im Bereich der gewerblichen Reinigung sind konstruktiv einfachste Lösung oftmals zu die zu bevorzugenden.

Die zu reinigenden Hohlräume der Hohlkörper sind mit großem Vorteil leicht zugänglich, die Vorrichtung vermeidet durch Nutzung der Schwerkraft mit großem Vorteil alle aktiven Antriebe in Form von Motoren, Federn oder ähnlichen Rückstellelementen und schaltet die Bedienzeitabhängigkeit der Dosierung aus: Ein Benutzer kann das Betätigungselement solange drücken wie er will, ohne dass es zu einer Reinigungsmittelüberdosierung kommen könnte. Die gesamte Vorrichtung ist mit großem Vorteil autoklavierbar und ist so höchsten Ansprüchen an die Hygiene gerechtwerdend. Mit großem Vorteil ist das erfindungsgemäße Dosiervolumen automatisch selbstfüllend durch eine reine lineare Bewegung des erfindungsgemäßen Hohlkolbens in eine erste Position und selbstentleerend in seiner zweiten Position.

### BEZUGSZEICHENLISTE

- 1: Dosiersystem
- 2: Vorratsvolumen
- 3: Dosiervorrichtung
- 4: Rohrabschnitt
- 5: Hohlkolben
- 6: Hohlraum
- 7: erste Position
- 8: zweite Position
- 9: Abstandshalter
- 10: Stirnseitendeckel
- 11: Stirnseitendeckel
- 12: Zylindermantelabschnitt
- 13: Steg
- 14: Auffangwanne
- 15: Betätigungselement
- 16: Wirkende
- 17: entferntes Ende
- 18: Kipphebel
- 19: Auslassöffnung
- 20: Rohrmantel
- 21: Kontaktelement
- 22: Reinigungssystemwagen
- 23: Aussparung
- 24: Vordere Wand
- 25: Gestänge
- 26: Verbinder
- 27: Durchführung
- 28: Auslaufschräge
- 29: Dichtung
- 30: Markierung
- 31: Markierung
- 32: Führungsnut
- 33: Dosiervolumen
- 34: vorratsvolumenabgewandtes Ende
- 35: erste Wandöffnung
- 36: vorratsvolumenseitiges Ende
- 37: zweite Wandöffnung
- 38: Kompensationsgewicht
- 39: vorratsvolumenseitiger Rand
- 40: Mutter
- 41: Außengewinde
- 42: Auflagesteg
- 43: Dichtring

## Patentansprüche

1. Dosiersystem (1) für Reinigungsflüssigkeiten im Bereich der gewerblichen Reinigung aufweisend ein Vorratsvolumen (2) und eine am Vorratsvolumen (2) angeordnete Dosiervorrichtung (3), wobei die Dosiervorrichtung (3) einen mit dem Vorratsvolumen (2) in Verbindung stehenden Rohrabschnitt (4) und einen in diesem beweglich geführten Hohlkolben (5) aufweist, wobei ein Hohlraum (6) des in einer ersten Position (7) befindlichen Hohlkolbens (5) aus dem Vorratsvolumen (2) heraus zugänglich ist und der Hohlraum (6) des in einer zweiten Position (8) befindlichen Hohlkolbens (5) mit einer Umgebung des Dosiersystems (1) in Verbindung stehend ist, wobei der Hohlkolben (5) zwei, voneinander mittels eines Abstandshalters (9), beabstandete Stirnseitendeckel (10, 11) aufweist, die zwischen sich ein Dosiervolumen (33) definieren, **dadurch gekennzeichnet, dass** der Abstandshalter (9) als Zylindermantelabschnitt (12) und/oder als ein oder mehrere Stege (13) ausgebildet ist, wobei die Stege (13) miteinander verbunden und/oder in ihrer Längsachse ein- oder mehrfach geteilt und/oder mit einem Stirnseitendeckel (10, 11) verbunden ausgebildet sind.

2. Dosiersystem (1) nach Anspruch 1, **dadurch gekennzeichnet, dass** der Rohrabschnitt (4) zylindrisch ausgebildet ist und an seinem vorratsvolumenabgewandten Ende (34) mindestens eine erste Wandöffnung (35) aufweist und /oder an seinem vorratsvolumenseitigen Ende (36) mindestens eine zweite Wandöffnung (37) aufweist.

3. Dosiersystem (1) nach Anspruch 1 oder 2, **dadurch gekennzeichnet, dass** es mehr als einen Hohlkolben (5) aufweist, insbesondere mehrere Hohlkolben (5), die sich in jeweils in ihrem Dosiervolumen (33) unterscheiden, bevorzugt aufgrund von unterschiedlichen Abstandshaltervolumina.

4. Dosiersystem (1) nach Anspruch 1, 2 oder 3, **dadurch gekennzeichnet, dass** der Abstandshalter (9) säulenartig ausgebildet ist.

5. Dosiersystem (1) nach einem der vorherigen Ansprüche, **dadurch gekennzeichnet, dass** ein Stirnseitendeckel (10, 11) ein Kompensationsgewicht (38) aufweist, insbesondere ein derart angeordnetes Kompensationsgewicht (38), dass es in der zweiten Position (8) auf einem vorratsvolumenseitigen Rand (39) des Rohrabschnitts (4) aufliegend ist.

6. Dosiersystem (1) nach einem der vorhergehenden Ansprüche, **dadurch gekennzeichnet, dass** es eine zu dem Vorratsvolumen (2) beabstandete Auffangwanne (14) aufweist.

7. Dosiersystem (1) nach einem der vorhergehenden Ansprüche, **dadurch gekennzeichnet, dass** ein auf den Hohlkolben (5) wirkendes Betätigungselement (15) vorgesehen ist, insbesondere ein mechanisch wirkendes Betätigungselement (15), bevorzugt ein rein mechanisch wirkendes, wobei das Betätigungselement (15) in der Auffangwanne (14) angeordnet ist, und ein auf den Hohlkolben (5) wirkendes Wirkende (16) aufweist, wobei die Auffangwanne (14) bevorzugt beabstandet zu einem vom Vorratsvolumen (2) entfernten Ende (17) des Rohrabschnitts (4) ausgebildet ist und wobei das Betätigungselement (15) bevorzugt an der Auffangwanne (14) angelenkt ausgebildet ist, insbesondere zwischen Betätigungselement (15) und Wirkende (16) ein Kipphebel (18) angeordnet ist.

8. Dosiersystem (1) nach einem der vorhergehenden Ansprüche, **dadurch gekennzeichnet, dass** das entfernte Ende (17) eine Auslassöffnung (19) im Rohrmantel (20) aufweist.

9. Dosiersystem (1) nach einem der vorhergehenden Ansprüche, **dadurch gekennzeichnet, dass** es zur Wandmontage ausgebildet ist, und/oder einen Deckel aufweist und/oder eine Druckausgleichsvorrichtung.

10. Verfahren zum Dosieren von Reinigungslösung aus einem Vorratsvolumen (2) auf einen Reinigungsgegenstand, bei dem ein in einem Rohrabschnitt (4) linear beweglicher Hohlkolben (5) ein Dosiervolumen (33) aufweist, wobei
- das Dosiervolumen (33) in einer ersten Position (7) des Hohlkolbens (5) mit dem Vorratsvolumen (2) in Kontakt steht, **dadurch gekennzeichnet, dass**
- in dieser ersten Position (7) Reinigungslösung in das Dosiervolumen (6) läuft und sich der Hohlkolben (5) schwerkraftgetrieben in Richtung einer zweiten Position (8) bewegt,
- in der zweiten Position (8) die im Dosiervolumen (6) befindliche Reiniungslösung durch wenigstens eine erste Wandöffnung (35) des Rohrabschnitts (4) auf einen Reinigungsgegenstand austritt.

11. Verfahren gemäß Anspruch 10, bei dem der Hohlkolben (5) von der zweiten Position (8) angetrieben in die erste Position (7) verbracht wird, insbesondere manuell angetrieben.

12. Verfahren gemäß einem der Ansprüche 10 oder 11, bei dem das Dosiervolumen (33) einstellbar ist durch Verwenden eines anderen Hohlkolbens (5') mit einem anderen Dosiervolumen (6') oder durch Veränderung des Dosiervolumens (6) eines Hohlkolbens (5).

## Claims

1. A dosing system (1) for cleaning liquids in the field of commercial cleaning, having a storage volume (2) and a dosing device (3) arranged on the storage volume (2), wherein the dosing device (3) has a pipe section (4), which is connected to the storage volume (2), and a hollow piston (5), which is guided in the pipe section in a movable manner, wherein a cavity (6) of the hollow piston (5) located in a first position (7) is accessible from the storage volume (2) and the cavity (6) of the hollow piston (5) located in a second position (8) is connected to surroundings of the dosing system (1), wherein the hollow piston (5) has two end-face covers (10, 11), which are spaced from one another by means of a spacer (9) and define a dosing volume (33) between them, **characterized in that** the spacer (9) is constructed as a cylinder casing section (12) and/or as one or more webs (13), wherein the webs (13) are constructed to be connected to one another and/or divided one or multiple times in their longitudinal axis and/or connected to an end-face cover (10, 11).

2. The dosing system (1) according to Claim 1, **characterized in that** the pipe section (4) is constructed cylindrically and has at least one first wall opening (35) at its end (34) facing away from the storage volume and/or has at least one second wall opening (37) at its end (36) on the storage volume side.

3. The dosing system (1) according to Claim 1 or 2, **characterized in that** it has more than one hollow piston (5), particularly a plurality of hollow pistons (5), which differ in terms of their dosing volume (33) in each case, preferably on the basis of different spacer volumes.

4. The dosing system (1) according to Claim 1, 2 or 3, **characterized in that** the spacer (9) is constructed in a columnar manner.

5. The dosing system (1) according to one of the preceding claims, **characterized in that** an end-face cover (10, 11) has a compensation weight (38), particularly a compensation weight (38) arranged in such a manner that, in the second position (8), it rests on an edge (39) of the pipe section (4) on the storage volume side.

6. The dosing system (1) according to one of the preceding claims, **characterized in that** it has a catch pan (14) spaced from the storage volume (2).

7. The dosing system (1) according to one of the preceding claims, **characterized in that** an actuating element (15) acting on the hollow piston (5) is provided, particularly a mechanically acting, preferably a purely mechanically acting, actuating element (15), wherein the actuating element (15) is arranged in the catch pan (14) and has an active end (16) acting on the hollow piston (5), wherein the catch pan (14) is preferably constructed to be spaced from an end (17) of the pipe section (4) remote from the storage volume (2) and wherein the actuating element (15) is preferably constructed to be articulated on the catch pan (14), in particular a tilting lever (18) is arranged between actuating element (15) and active end (16).

8. The dosing system (1) according to one of the preceding claims, **characterized in that** the remote end (17) has an outlet opening (19) in the pipe casing (20).

9. The dosing system (1) according to one of the preceding claims, **characterized in that** it is constructed for wall mounting, and/or has a cover and/or a pressure compensating device.

10. A method for dosing cleaning solution from a storage volume (2) onto an item to be cleaned, in which a hollow piston (5), which can be moved linearly in a pipe section (4), has a dosing volume (33), wherein
- the dosing volume (33) is in contact with the storage volume (2) in a first position (7) of the hollow piston (5),
**characterized in that**
- in this first position (7), cleaning solution runs into the dosing volume (6) and the hollow piston (5) moves in a gravity-driven manner in the direction of a second position (8),
- in the second position (8), the cleaning solution located in the dosing volume (6) exits through at least one first wall opening (35) of the pipe section (4) onto an item to be cleaned.

11. The method according to Claim 10, in which the hollow piston (5) is brought from the second position (8) into the first position (7) in a driven, particularly manually driven, manner.

12. The method according to one of Claims 10 or 11, in which the dosing volume (33) can be set by using a different hollow piston (5') with a different dosing volume (6') or by changing the dosing volume (6) of a hollow piston (5) .

## Revendications

1. Système de dosage (1) de liquides de nettoyage dans le secteur du nettoyage industriel, comportant un volume de réserve (2) et un dispositif doseur (3) placé sur le volume de réserve (2), le dispositif doseur (3) comportant un tronçon tubulaire (4) qui est en liaison avec le volume de réserve (2) et un piston creux (5) guidé de manière mobile dans celui-ci, une cavité (6) du piston creux (5) se trouvant dans une première position (7) étant accessible à partir de l'extérieur du volume de réserve (2) et la cavité (6) du piston creux (5) se trouvant dans une deuxième position (8) étant en liaison avec un environnement du système de dosage (1), le piston creux (5) comportant deux couvercles de face frontale (10, 11) écartés au moyen d'un espaceur (9), qui définissent entre eux un volume de dosage (33), **caractérisé en ce que** l'espaceur (9) est conçu sous la forme d'un tronçon d'enveloppe cylindrique (12) et/ou d'un ou de plusieurs listels (13), les listels (13) étant reliés les uns aux autres et/ou étant divisés une ou plusieurs fois dans leur axe longitudinal et/ou étant conçus en étant reliés avec un couvercle de face frontale (10, 11).

2. Système de dosage (1) selon la revendication 1, **caractérisé en ce que** le tronçon tubulaire (4) est conçu sous forme cylindrique et comporte sur son extrémité (34) opposée au volume de réserve au moins un premier orifice de paroi (35) et /ou sur son extrémité (36) du côté du volume de réserve au moins un deuxième orifice de paroi (37).

3. Système de dosage (1) selon la revendication 1 ou 2, **caractérisé en ce qu'**il comporte plus d'un piston creux (5), notamment plusieurs piston creux (5), qui se différencient par respectivement leur volume de dosage (33), de préférence du fait de différents volumes d'espaceur.

4. Système de dosage (1) selon la revendication 1, 2 ou 3, **caractérisé en ce que** l'espaceur (9) est conçu à la manière d'une colonne.

5. Système de dosage (1) selon l'une quelconque des revendications précédentes, **caractérisé en ce qu'**un couvercle de face frontale (10, 11) comporte un poids compensateur (38), notamment un poids compensateur (38) placé de telle sorte que dans la deuxième position (8), il repose sur un bord (39) du côté du volume de réserve du tronçon tubulaire (4).

6. Système de dosage (1) selon l'une quelconque des revendications précédentes, **caractérisé en ce qu'**il comporte une cuve collectrice (14) écartée du volume de réserve (2) .

7. Système de dosage (1) selon l'une quelconque des revendications précédentes, **caractérisé en ce qu'**il est prévu un élément de manœuvre (15) agissant sur le piston creux (5), notamment un élément de manœuvre (15) à action mécanique, de préférence à action purement mécanique, l'élément de manœuvre (15) étant placé dans la cuve collectrice (14) et comportant une extrémité active (16) agissant sur le piston creux (5), la cuve collectrice (14) étant conçue de préférence en étant écartée d'une extrémité (17) du tronçon tubulaire (4) qui est éloignée du volume de réserve (2) et l'élément de manœuvre (15) étant conçu de préférence en étant articulé sur la cuve collectrice (14), un levier basculant (18) étant placé notamment entre l'élément de manœuvre (15) et l'extrémité active (16).

8. Système de dosage (1) selon l'une quelconque des revendications précédentes, **caractérisé en ce que** l'extrémité (17) éloignée comporte un orifice de sortie (19) dans l'enveloppe tubulaire (20).

9. Système de dosage (1) selon l'une quelconque des revendications précédentes, **caractérisé en ce qu'**il est conçu pour un montage mural, et/ou comporte un couvercle et/ou un dispositif compensateur de pression.

10. Procédé, destiné à doser une solution de nettoyage à partir d'un volume de réserve (2) sur un objet à nettoyer, lors duquel un piston creux (5) mobile de manière linéaire dans un tronçon tubulaire (4) comporte un volume de dosage (33),
- dans une première position (7) du piston creux (5), le volume de dosage (33) étant en contact avec le volume de réserve (2),
**caractérisé en ce que**
- dans ladite première position (7), de la solution de nettoyage coule dans le volume de dosage (6) et le piston creux (5) se déplace sous l'effet de la gravité dans la direction d'une deuxième position (8),
- dans la deuxième position (8), la solution de nettoyage se trouvant dans le volume de dosage (6) sort par au moins un premier orifice de paroi (35) du tronçon tubulaire (4) sur un objet à nettoyer.

11. Procédé selon la revendication 10, lors duquel, entraîné à partir de la deuxième position (8), notamment entraîné manuellement, le piston creux (5) est amené dans la première position (7).

12. Procédé selon l'une quelconque des revendications 10 ou 11, lors duquel le volume de dosage (33) est réglable par utilisation d'un autre piston creux (5') présentant un autre volume de dosage (6') ou par variation du volume de dosage (6) d'un piston creux (5) .
